# EUROPÄISCHE PATENTSCHRIFT

(11) **EP 4 406 820 B1**
(45) Veröffentlichungstag und Bekanntmachung des Hinweises auf die Patenterteilung: **17.09.2025**
(21) Anmeldenummer: 24151082.5
(22) Anmeldetag: 10.01.2024
(51) Int. Cl.: B62K 25/28, F16F 9/54

(54) **FAHRRAD-BAUGRUPPE**
BICYCLE ASSEMBLY
ENSEMBLE BICYCLETTE

(30) Priorität: 26.01.2023 AT 500412023
(43) Veröffentlichungstag der Anmeldung: 31.07.2024
(73) Patentinhaber: KTM AG, 5230 Mattighofen (AT)
(72) Erfinder: PFÄFFLE, Luca, 5163 Mattsee (AT); PASCHING, Emrich, 5241 Maria Schmolln (AT)
(74) Vertreter: Torggler & Hofmann Patentanwälte - Innsbruck

(56) Entgegenhaltungen:
- US-A1- 2012 074 666

## Beschreibung

Die vorliegende Erfindung betrifft eine Fahrrad-Baugruppe gemäß dem Oberbegriff des Anspruchs 1 sowie einen Fahrradrahmen mit einer solchen Fahrrad-Baugruppe.

Im Stand der Technik sind allgemein Fahrradrahmen mit einem gefederten Hinterbau bekannt. Gewöhnlich ist dabei eine Achse eines Hinterrads im Hinterbau des Fahrradrahmens eingespannt und ist geführt innerhalb eines Federwegs relativ zu einem Hauptrahmen des Fahrradrahmens bewegbar. Eine Federung und Dämpfung der Bewegung erfolgt gewöhnlich durch einen linear längenveränderbaren Stoßdämpfer.

Zur Verbindung von Stoßdämpfern mit einem Hinterbau sind grundsätzlich Verbindungen mit Lagerbolzen bekannt. Dabei kann ein Stoßdämpfer mit einem Lagerbolzen direkt mit dem Hinterbau verbindbar sein.

Zur Anlenkung von Stoßdämpfern sind im Stand der Technik auch Anlenkbügel bekannt, mit denen eine Verbindung zu einem Fahrradrahmen herstellbar ist. Insbesondere kann der Stoßdämpfer mit einem Anlenkbügel mit dem Hinterbau des Fahrradrahmens verbindbar sein. Im Stand der Technik bekannte Anlenkbügel können allgemein der Verbindung zwischen dem Stoßdämpfer und dem Hinterbau und/oder dem Fahrradrahmen dienen. Dabei kann der Anlenkbügel der Verlängerung des Stoßdämpfers oder einer Verlängerung der Verbindung zwischen dem Stoßdämpfer und dem Hinterbau und/oder dem Fahrradrahmen dienen, beispielsweise um den Stoßdämpfer über eine Strebe des Fahrradrahmens - beispielsweise ein Sattelrohr - hinweg mit dem Hinterbau zu verbinden.

Bei einer Verbindung des Stoßdämpfers mit dem Hinterbau und/oder dem Fahrradrahmen über lediglich einen Lagerbolzen muss die Geometrie des Hinterbaus an den Stoßdämpfer und die Lage des Stoßdämpfers im Fahrradrahmen angepasst werden. Bei einer Verbindung des Stoßdämpfers mit dem Hinterbau und/oder dem Fahrradrahmen über einen Anlenkbügel, welcher der Verlängerung des Stoßdämpfers oder der Verbindung zum Hinterbau und/oder dem Fahrradrahmen dient, können unerwünscht erhöhte Kräfte, insbesondere lateral zur linearen Bewegbarkeit des Stoßdämpfers gerichtete Kräfte, auftreten. Auch können zusätzliche Führungsmittel zur Führung der Bewegung eines solchen Anlenkbügels nötig sein, wie etwa Linearführungen oder zusätzliche Hebel. Die Geometrie und Kinematik eines gefederten Fahrradrahmens von im Stand der Technik bekannten Anlenkbügeln ist von den Abmessungen, insbesondere der Längserstreckung, des Stoßdämpfers bestimmt.

Die WO2019010394A1 der Yeti Cycling, Llc zeigt eine Verlängerung einer Anlenkung eines Federbeins mit zwei zueinander beweglichen Schenkeln.

Die US 2012 074666 A1 der Specialized Bicycle Components Inc, welche die Präambel des Anspruchs 1 zeigt, zeigt eine Verlängerung für eine Anlenkung eines Federbeins. Aufgabe der Erfindung ist es, eine gegenüber dem Stand der Technik verbesserte Fahrrad-Baugruppe umfassend einen Stoßdämpfer und einen Anlenkbügel anzugeben, bei welcher die eingangs genannten Nachteile nicht auftreten.

Die Aufgabe wird von einer Fahrrad-Baugruppe mit den Merkmalen des Anspruchs 1 und einem Fahrradrahmen mit einer solchen Fahrrad-Baugruppe gelöst.

Vorteilhafte Ausführungen sind in den abhängigen Ansprüchen definiert.

Die Fahrrad-Baugruppe umfasst grundsätzliche einen Stoßdämpfer und einen Anlenkbügel.

Der Stoßdämpfer weist eine Längsachse auf, entlang welcher der Stoßdämpfer bei einer Kompression innerhalb eines vorgegebenen oder vorgebbaren Hubs längenveränderbar ist. Insbesondere kann der Stoßdämpfer linear längenveränderbar ausgebildet sein. Der Stoßdämpfer kann eine Längserstreckung aufweisen, welche sich im Wesentlichen von einem ersten Ende zu einem zweiten Ende des Stoßdämpfers erstreckt. Zur Befestigung des Stoßdämpfers in oder an einem Fahrradrahmen kann der Stoßdämpfer am ersten Ende ein erstes Auge mit einer Durchgangsöffnung aufweisen und an dem zweiten Ende ein zweites Auge mit einer Durchgangsöffnung aufweisen. Gängige Bezeichnungen für im Stand der Technik bekannte Stoßdämpfer umfassen Federbein, Luftdämpfer, Dämpfer, Fahrrad-Dämpfer, Hinterbaudämpfer oder Federelement.

Für einen Fahrradrahmen sind unterschiedliche Bauformen möglich. Grundsätzlich kann ein Fahrradrahmen einen Hauptrahmen und einen Hinterbau mit zumindest einer relativ zum Hauptrahmen um eine Schwenkachse schwenkbaren Strebe aufweisen. Am oder im Hauptrahmen sind gewöhnlich ein Sattel, ein Tretlager samt Kurbeln und eine Fahrradgabel zur Lagerung des Vorderrades gelagert. Eine Achse eines Hinterrads kann im Hinterbau des Fahrradrahmens eingespannt sein und kann geführt innerhalb eines Federwegs entlang einer Federbewegung relativ zu einem Hauptrahmen des Fahrradrahmens bewegbar sein. Eine Federung und Dämpfung der Bewegung erfolgt gewöhnlich durch einen längenveränderbaren Stoßdämpfer. An der oder über die Strebe des Fahrradrahmens ist gewöhnlich eine Achse eines Rades, insbesondere eines Hinterrades, des Fahrrads gelagert. Eine Federung eines Fahrradrahmens kann zumindest ein federnd gelagertes Hinterrad und zumindest ein federnd gelagertes Vorderrad umfassen.

Speziell für den Hinterbau sind Bauformen mit unterschiedlicher Geometrie und Kinematik bekannt, wobei der Hinterbau gewöhnlich zumindest eine schwenkbare Strebe zur Kraftbeaufschlagung des Stoßdämpfers aufweist.

Die zumindest eine schwenkbare Strebe kann als Kettenstrebe, als Sitzstrebe oder als Wippe ausgebildet sein.

Bei einer Bewegung der zumindest einen schwenkbaren Strebe relativ zum Hauptrahmen kann es durch Kraftbeaufschlagung zu einer Kompression des Stoßdämpfers kommen, wobei dieser zwischen Streben des Hinterbaus oder zischen dem Hinterbau und dem Hauptrahmen angeordneten sein kann.

In einer einfachen Ausführung ist der Hinterbau als ein sogenannter Eingelenker ausgeführt, bei welchem die Hinterachse des Fahrrads mit einem zentralen Gelenklager mit dem Hauptrahmen verbunden ist. Die zumindest eine schwenkbare Strebe kann um das zentrale Gelenklager relativ zum Hauptrahen verschwenken, wobei es zu einer Kompression des zwischen dem Hinterbau und dem Hauptrahmen angeordneten Stoßdämpfer kommen kann.

In einer weiteren Ausführung kann der Hinterbau als ein sogenannter Mehrgelenker, insbesondere Viergelenker, ausgeführt sein, bei welchem die Hinterachse mit zumindest zwei Gelenklagern, ähnlich einer Parallelogramm-Mechanik, mit dem Hauptahmen verbunden ist. Die zumindest eine schwenkbare Strebe kann dabei um ein Gelenklager relativ zum Hauptrahen verschwenken, wobei es zu einer Kompression des zwischen Streben des Hinterbaus oder zwischen dem Hinterbau und dem Hauptrahmen angeordneten Stoßdämpfer kommen kann.

In einer weiteren Ausführung kann der Hinterbau um einen virtuellen Drehpunkt schwenkbar am Hauptrahmen gelagert sein. Eine um einen virtuellen Drehpunkt schwenkbar gelagerter Hinterbau kann durch eine Kombination von Gelenklagern und/oder Linearführungen erreicht werden. Der Hinterbau kann zumindest eine schwenkbare Strebe, beispielsweise in Form zumindest einer Wippe, zur Kompression des Stoßdämpfers bei einer Bewegung der zumindest einen schwenkbaren Strebe relativ zum Hauptrahmen aufweisen.

Der Anlenkbügel kann grundsätzlich zwischen dem Hinterbau und dem Stoßdämpfer angeordnet sein.

Der Anlenkbügel weist für eine schwenkbare Verbindung des Anlenkbügels mit dem ersten Ende des Stoßdämpfers zumindest eine erste Gelenkverbindung auf. Durch die erste Gelenkverbindung kann eine um eine erste Schwenkachse verlaufende Schwenkbewegung zwischen dem Anlenkbügel und dem Stoßdämpfer erfolgen. Die Verschwenkbarkeit um die erste Schwenkachse kann auf einen rotatorischen Freiheitsgrad beschränkt sein.

Der Anlenkbügel weist für eine schwenkbare Verbindung mit einem Fahrradrahmen eines Fahrrads zumindest eine zweite Gelenkverbindung auf. Durch die zumindest eine zweite Gelenkverbindung kann eine um eine zweite Schwenkachse verlaufende Schwenkbewegung zwischen dem Anlenkbügel und einem Fahrradrahmen, beispielsweise einer Strebe eines Hinterbaus oder einem Hauptrahmen, erfolgen. Die Verschwenkbarkeit um die zweite Schwenkachse kann auf einen rotatorischen Freiheitsgrad beschränkt sein.

In Montagelage des Anlenkbügels am Stoßdämpfer ist der Anlenkbügel über die erste Gelenkverbindung mit dem ersten Ende des Stoßdämpfers verbunden. Dabei ist für den Anlenkbügel vorgesehen, dass ist die zumindest eine zweite Gelenkverbindung und die zweite Schwenkachse in Bezug auf die Längsachse des Stoßdämpfers zwischen dem ersten und dem zweiten Ende des Stoßdämpfers angeordnet sind, wobei die erste Schwenkachse und die zweite Schwenkachse mit einem positiven Normalabstand voneinander beabstandet sind und quer zueinander verlaufen.

Für die Zwecke der Erfindung kann der Ausdruck "quer" so verstanden werden, dass in Projektion auf eine Längserstreckung des Stoßdämpfers gesehen, die erste Schwenkachse und die zweite Schwenkachse unter einem Winkel von 30 Grad bis 90 Grad zueinander verlaufen.

Insbesondere können die erste Schwenkachse und die zweite Schwenkachse in Projektion auf eine Längserstreckung des Stoßdämpfers gesehen senkrecht zueinander verlaufen.

Die zumindest eine zweite Gelenkverbindung - und damit die zweite Schwenkachse - können innerhalb der Längserstreckung des Stoßdämpfers, insbesondere für alle Längserstreckungen des Stoßdämpfers innerhalb vorgegebenen oder vorgebbaren Hubs, angeordnet sein. Die zweite Schwenkachse der zweiten Gelenkverbindung und die Längsachse des Stoßdämpfers können gemeinsam in einer Ebene liegen.

Die Anordnung der zumindest einen zweiten Gelenkverbindung - und damit der zweite Schwenkachse - kann innerhalb der Längserstreckung des Stoßdämpfers durch entsprechende Dimensionierung des Anlenkbügels im Wesentlichen frei gewählt werden. Die Anordnung der zumindest einen zweiten Gelenkverbindung kann im Wesentlichen unabhängig von der Längserstreckung des Stoßdämpfers erfolgen. Die Geometrie und Kinematik eines gefederten Fahrradrahmens mit einem solchen Anlenkbügeln ist somit im Wesentlichen nicht von den Abmessungen, insbesondere der Längserstreckung, des Stoßdämpfers bestimmt. Umgekehrt kann sich eine breitere Eignung eines Stoßdämpfers mit einer bestimmten Längserstreckung für unterschiedliche Geometrien und Kinematiken eines gefederten Fahrradrahmens ergeben.

Durch die Beabstandung der Schwenkachsen mit einem positiven Normalabstand können auf den Stoßdämpfer wirkende Kräfte, insbesondere lateral zu einer linearen Bewegbarkeit des Stoßdämpfers gerichtete Querkräfte, verringert werden.

Insbesondere kann, gegebenenfalls mit entsprechender Dimensionierung des Anlenkbügels, der Abstand der zumindest einen zweiten Gelenkverbindung, welche zwischen dem Anlenkbügel und einem Fahrradrahmen besteht, und dem zweiten Ende des Stoßdämpfers im Wesentlichen frei gewählt werden. Der Abstand der zumindest einen zweiten Gelenkverbindung und dem zweiten Ende des Stoßdämpfers kann im Wesentlichen unabhängig vom Hub des Stoßdämpfers, der gewöhnlich mit der Längserstreckung korreliert, gewählt werden.

Durch den in Projektion auf eine Längserstreckung des Stoßdämpfers gesehen quer zueinander gelegenen Verlauf der ersten Schwenkachse der gelenkigen Verbindung zwischen dem Anlenkbügel und dem Stoßdämpfer und der zweiten Schwenkachse der gelenkigen Verbindung zwischen dem Anlenkbügel und einem Fahrradrahmen verlaufen die Schwenkachsen nicht parallel zueinander. Durch die mit einem positiven Normalabstand erfolgende Beabstandung der Schwenkachsen weisen diese keinen gemeinsamen Schnittpunkt auf.

Durch den in Projektion auf eine Längserstreckung des Stoßdämpfers gesehen quer zueinander gelegenen Verlauf der ersten Schwenkachse und der zweiten Schwenkachse kann die Anlenkung des Stoßdämpfers im Wesentlichen zwei rotatorische Freiheitsgrade aufweisen. Bei einer Kompression des in oder an einem Fahrradrahmen angeordneten Stoßdämpfers können lateral zu einer linearen Bewegbarkeit des Stoßdämpfers wirkende Querkräfte verringert werden. Auswirkungen von Fertigungstoleranzen des Fahrradrahmens auf den Stoßdämpfer können so verringert werden.

Durch den in Projektion auf eine Längserstreckung des Stoßdämpfers gesehen quer zueinander gelegenen Verlauf der ersten Schwenkachse und der zweiten Schwenkachse kann eine Einleitung von auf einen Hinterbau eines Fahrradrahmens wirkenden Querkräften durch eine Relativbewegung des Anlenkbügels und des Stoßdämpfers zumindest teilweise vermieden werden.

Durch die Kombination der Beabstandung der Schwenkachsen mit einem positiven Normalabstand und des quer zueinander gelegenen Verlaufs der ersten Schwenkachse und der zweiten Schwenkachse zueinander können synergetisch durch die Fahrrad-Baugruppe auf den Stoßdämpfer wirkende Querkräfte minimiert und die Eignung eines Stoßdämpfers für unterschiedliche Geometrien und Kinematiken eines gefederten Fahrradrahmens optimiert werden.

Der Anlenkbügel benötigt durch den quer zueinander gelegenen Verlauf der ersten Schwenkachse und der zweiten Schwenkachse keine zusätzlichen Führungsmittel, wie etwa am Fahrradrahmen angeordnete Linearführungen oder zusätzliche Hebel.

Die Gelenkverbindungen können allgemein als Gleitlager, Wälzlager oder als ein Festkörpergelenk mit einem rotatorischen Freiheitsgrad ausgebildet sein.

Der Anlenkbügel kann einen Mittelteil und zwei Arme aufweisen, wobei die zwei Arme von dem Mittelteil des Anlenkbügels abstehend ausgebildet sein können.

Im oder am Mittelteil kann die zumindest eine erste Gelenkverbindung ausgebildet sein. Für jeweils eine schwenkbare Verbindung mit einem Fahrradrahmen eines Fahrrads, insbesondere mit einem Hinterbau kann im oder am ersten Arm die zweite Gelenkverbindung ausgebildet sein. In oder am zweiten Arm kann eine dritte Gelenkverbindung ausgebildet sein, wobei die zweite Gelenkverbindung und die dritte Gelenkverbindung gemeinsam auf der zweiten Schwenkachse B liegen können.

Die zwei Arme können feststehend am Mittelteil angeordnet sein, wobei der Anlenkbügel in einer bevorzugten Ausführung einstückig gefertigt sein kann.

Der Anlenkbügel kann zumindest abschnittsweise einen im Wesentlichen T-förmigen und/oder U-förmigen Querschnitt aufweisen. Insbesondere können der Mittelteil und/oder die Arme zumindest abschnittsweise einen T-förmigen und/oder **U-**förmigen Querschnitt aufweisen.

Der positive Normalabstand der ersten Schwenkachse und der zweiten Schwenkachse in einem Bereich von 10 Millimetern bis 75 Millimetern liegt. Vorzugsweise kann der Normalabstand der ersten Schwenkachse und der zweiten Schwenkachse in einem Bereich von 25 Millimetern bis 50 Millimetern liegen. Besonders bevorzugt kann der Normalabstand 25 Millimeter betragen.

Der Anlenkbügel kann gekrümmt ausgebildet sein, wobei eine dem Stoßdämpfer zugewandte Seite des Anlenkbügels eine konkave Krümmung aufweisen kann. Eine Beabstandung der Schwenkachsen kann sich durch die konkave Krümmung konstruktiv einfach ergeben.

In Montagelage des Anlenkbügels am Stoßdämpfer kann der Stoßdämpfer zumindest teilweise zwischen der zumindest einen ersten Gelenkverbindung und der zumindest einen zweiten Gelenkverbindung anordenbar sein. Der Anlenkbügel kann den Stoßdämpfer im Bereich des ersten Endes teilweise umgeben.

Der Anlenkbügel kann in einer bevorzugten Ausführung einen Mittelteil und zwei von dem Mittelteil abstehende Arme aufweisen, wobei in Montagelage des Anlenkbügels am Stoßdämpfer der Stoßdämpfer zumindest teilweise zwischen den zwei Armen anordenbar sein kann. Neben einer kompakten Bauweise ergibt sich dadurch auch eine günstige Momentenbelastung des Stoßdämpfers, bei welcher die zweite Schwenkachse der zweiten Gelenkverbindung und die Längsachse des Stoßdämpfers gemeinsam in einer Ebene liegen können.

Der Anlenkbügel kann zumindest im Bereich der zweiten Gelenkverbindung einen rohrförmigen Querschnitt aufweisen und in Montagelage des Anlenkbügels am Stoßdämpfer kann der Stoßdämpfer zumindest teilweise vom Anlenkbügel umschlossen sein. Der Anlenkbügel kann den Stoßdämpfer teilweise umhüllen.

Schutz wird auch begehrt für einen Fahrradrahmen mit einer wie zuvor beschriebenen Fahrrad-Baugruppe.

Der Fahrradrahmen umfasst wie zuvor beschrieben einen Hauptrahmen und einen Hinterbau mit zumindest einer relativ zum Hauptrahmen um eine Schwenkachse schwenkbaren Strebe, mit welcher der Anlenkbügel mit der zumindest einen zweiten Gelenkverbindung verbindbar sein kann. Die zumindest eine schwenkbare Strebe kann als Kettenstrebe, als Sitzstrebe oder als Wippe ausgebildet sein. Der Anlenkbügel ist vorteilhaft mit der zumindest einen ersten Gelenkverbindung schwenkbar mit dem ersten Ende des Stoßdämpfers verbunden und mit der zumindest einen zweiten Gelenkverbindung schwenkbar mit dem Hauptrahmen oder dem Hinterbau verbunden.

Die durch die zumindest eine zweite Gelenkverbindung verlaufende zweite Schwenkachse ist vorteilhaft parallel zu der Schwenkachse der zumindest einen schwenkbaren Strebe des Hinterbaus angeordnet.

Der Stoßdämpfer kann mit dem ersten Ende um die erste Schwenkachse schwenkbar mit der zumindest einen ersten Gelenkverbindung des Anlenkbügels verbunden sein. Mit dem zweiten Ende kann der Stoßdämpfer um eine Schwenkachse schwenkbar mit dem Hauptrahmen oder dem Hinterbau verbunden sein. Dabei ist vorteilhaft die Schwenkachse der Gelenkverbindung am zweiten Ende des Stoßdämpfers parallel zu der Schwenkachse der zumindest einen schwenkbaren Strebe des Hinterbaus verlaufend. Die erste Schwenkachse der gelenkigen Verbindung zwischen dem Anlenkbügel und dem ersten Ende des Stoßdämpfers kann dabei quer zu den beiden zuvor genannten Schwenkachsen verlaufen.

Der Stoßdämpfer kann an dem ersten Ende ein erstes Auge mit einer Durchgangsöffnung aufweisen und an dem zweiten Ende ein zweites Auge mit einer Durchgangsöffnung aufweisen, wobei in den Durchgangsöffnungen jeweils Lagerstellen für Gelenksverbindungen ausgebildet sein können. In Montagelage des Anlenkbügels am Stoßdämpfer und des Stoßdämpfers an dem Fahrradrahmen eines Fahrrads können die Durchgangsöffnungen der Augen quer zueinander verlaufen, wodurch sich ein quer zueinander gelegener Verlauf der Schwenkachsen des Anlenkbügels ergeben kann. Bei einem senkrechten Verlauf Schwenkachsen des Anlenkbügels kann sich ein senkrechter Verlauf der Durchgangsöffnungen der Augen ergeben.

Ausführungsbeispiele der Erfindung werden anhand der Figuren diskutiert. Es zeigen:
- Fig. 1a bis 1d: schematische Darstellungen unterschiedlicher Ausführungen von Stoßdämpfern
- Fig. 2: eine perspektivische Ansicht einer Ausführung einer Fahrrad-Baugruppe mit einer Strebe eines Hinterbaus
- Fig. 3a und 3b: Schnittdarstellungen durch die Ausführung einer Fahrrad-Baugruppe gemäß Figur 2
- Fig. 4a und 4b: eine Seitenansicht und eine Detailansicht einer Ausführung eines Fahrrads mit einer Ausführung einer Fahrrad-Baugruppe
- Fig. 5: eine Darstellung eines Fahrradrahmens mit einer Ausführung einer Fahrrad-Baugruppe

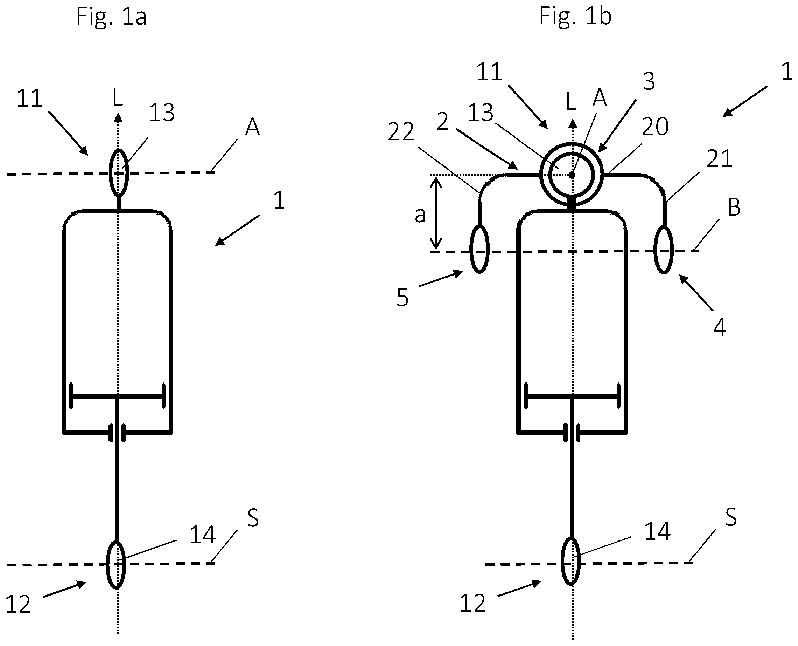

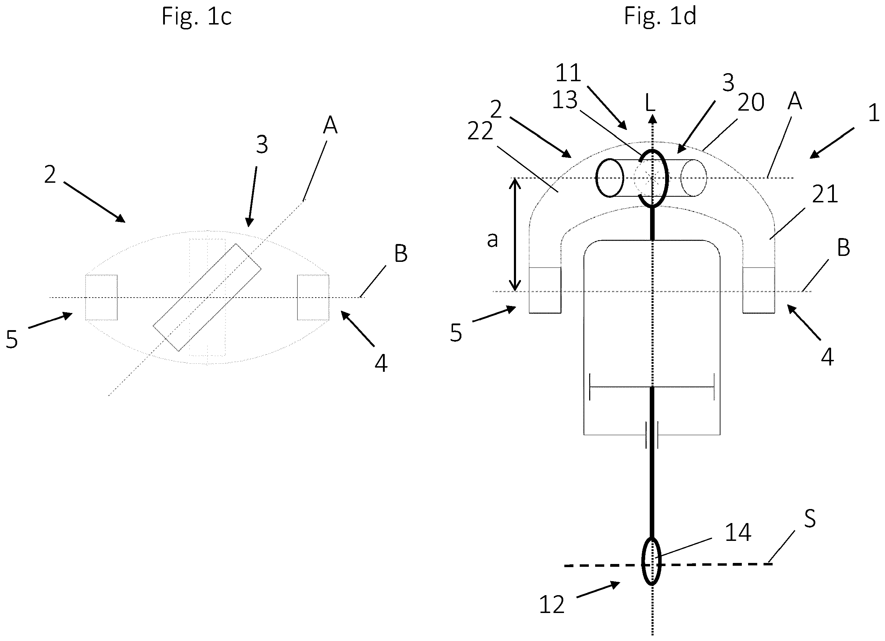

In Figur 1a ist schematisch ein Stoßdämpfer 1 gemäß einer im Stand der Technik bekannten Ausführung gezeigt. In Figur 1b ist schematisch eine Fahrrad-Baugruppe gemäß einer ersten Ausführung der Erfindung mit einem Stoßdämpfer 1 und einem Anlenkbügel 2 gezeigt. In den Figuren 1c und 1d sind schematisch eine Draufsicht entlang einer Längserstreckung L und eine Seitenansicht einer Fahrrad-Baugruppe gemäß einer zweiten Ausführung der Erfindung mit einem Stoßdämpfer 1 und einem Anlenkbügel 2 gezeigt.

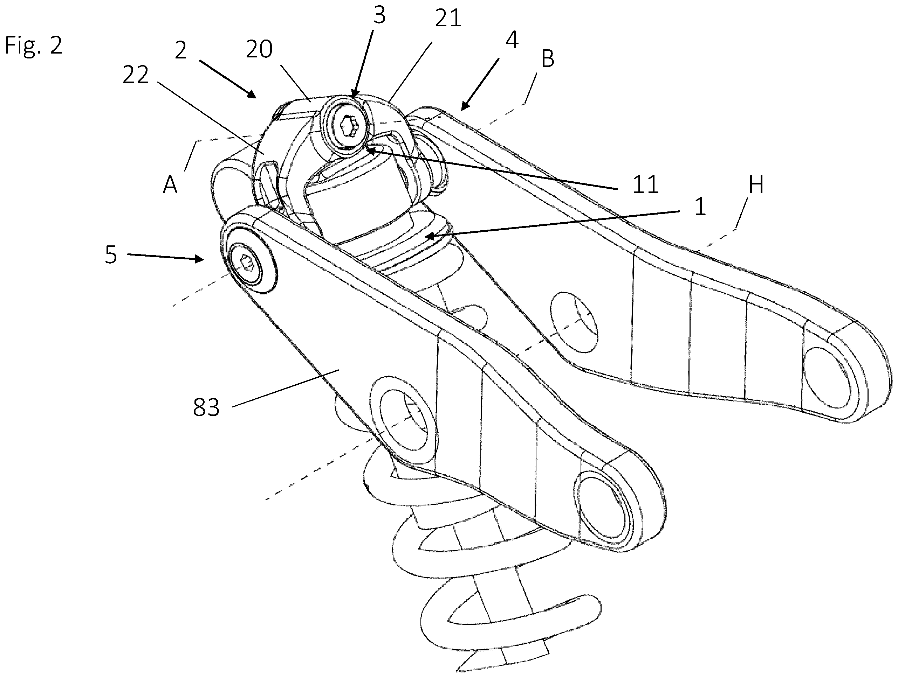

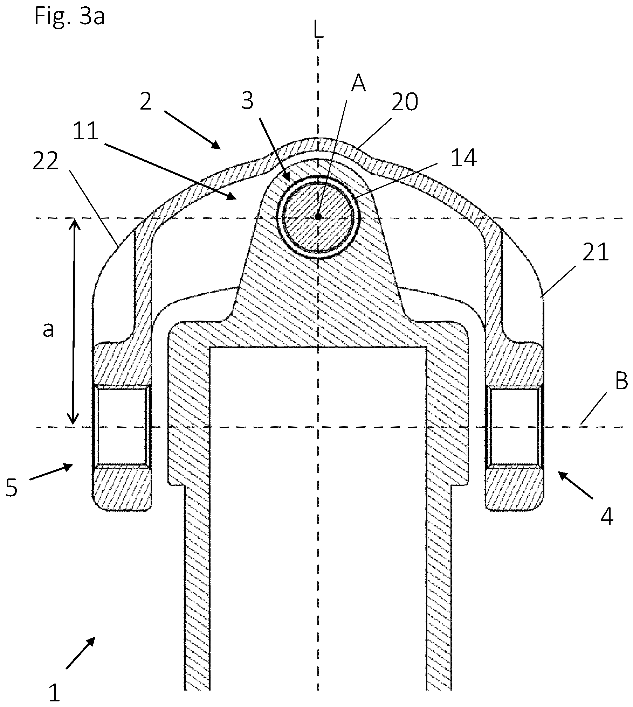

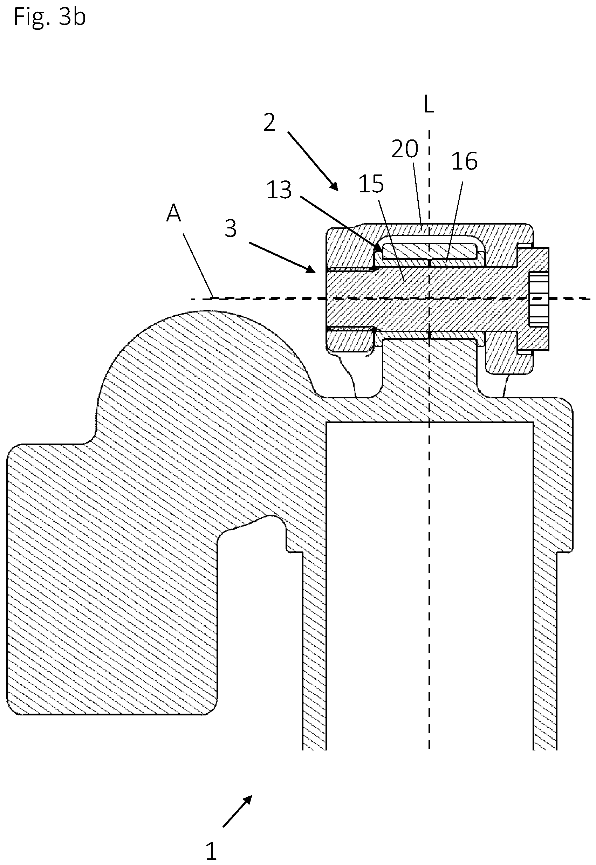

Figur 2 zeigt eine perspektivische Ansicht eine Fahrrad-Baugruppe gemäß einer ersten Ausführung der Erfindung mit einem Stoßdämpfer 1 und einem Anlenkbügel 2, welcher mit einer Strebe in Form einer Wippe 83 verbunden ist. In den Figuren 3a und 3b sind Schnittdarstellungen der in Figur 2 gezeigten Ausführung einer Fahrrad-Baugruppe mit einem Stoßdämpfer 1 und einem Anlenkbügel 2 gezeigt, wobei die Schnittebene in Figur 3a entlang der Längsachse L und der Schwenkachse B, und in Figur 3b entlang der Längsachse L und der Schwenkachse A verläuft.

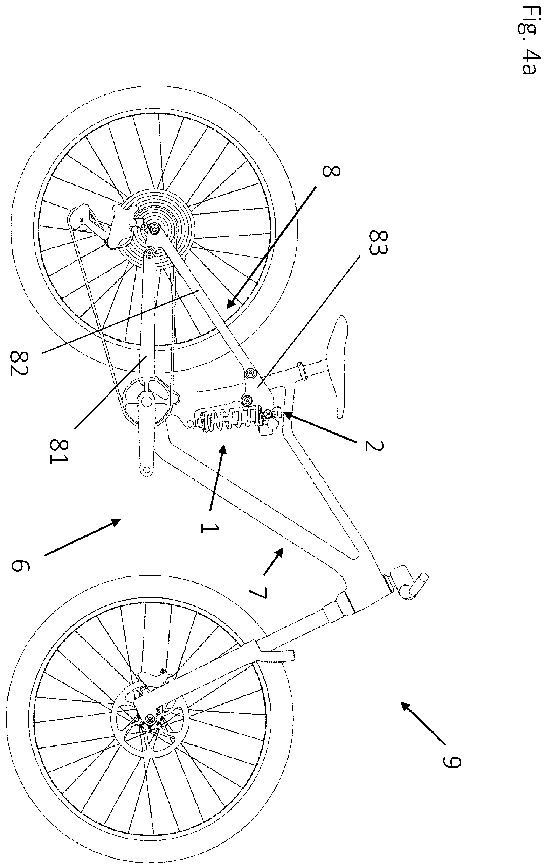

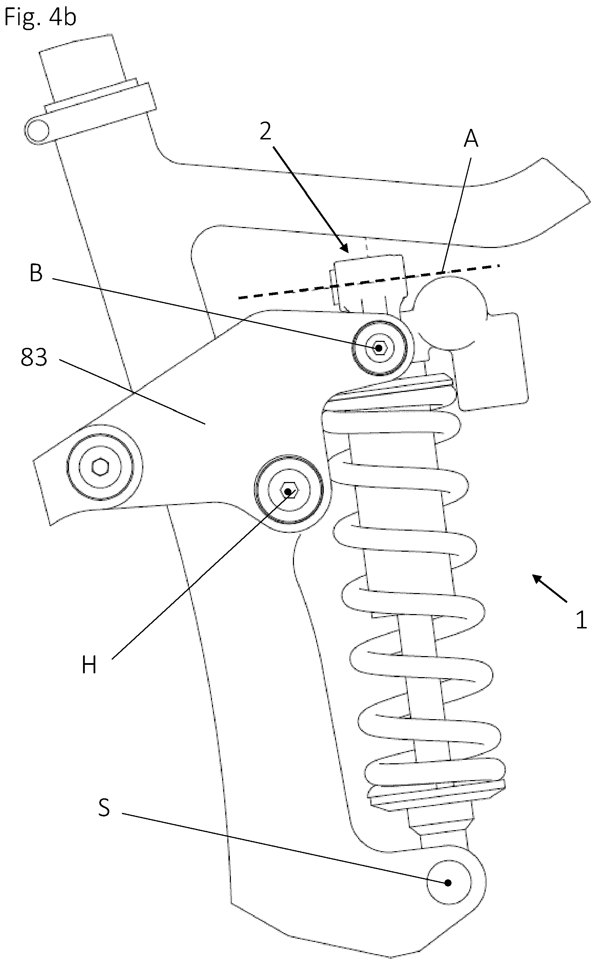

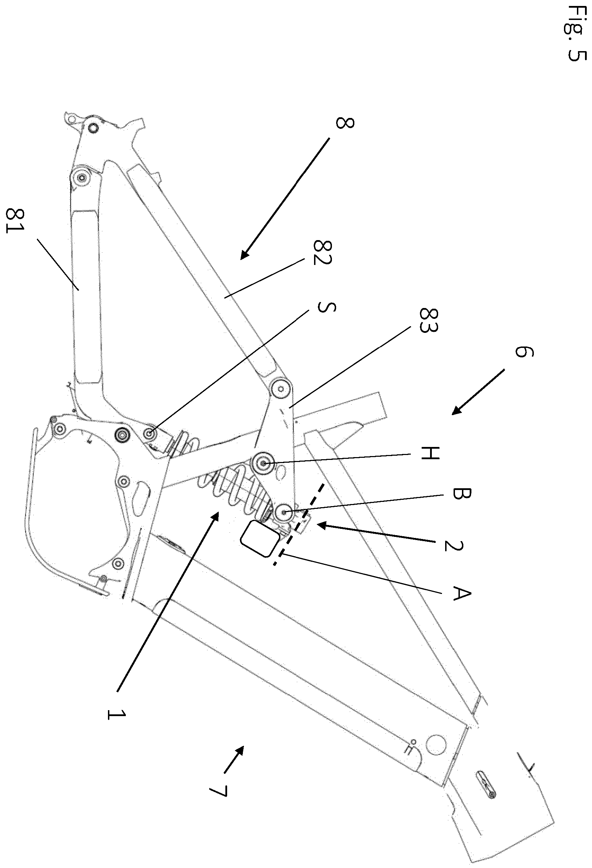

Figur 4a und 4b zeigen eine Seitenansicht und eine Detailansicht einer Ausführung eines Fahrrads 9 mit einem Fahrradrahmen 6 und einer Fahrrad-Baugruppe gemäß einer ersten Ausführung der Erfindung mit einem Stoßdämpfer 1 und einem Anlenkbügel 2. Figur 5 zeigt eine Seitenansicht einer weiteren Ausführung eines Fahrradrahmens mit einer Fahrrad-Baugruppe gemäß einer ersten Ausführung der Erfindung mit einem Stoßdämpfer 1 und einem Anlenkbügel 2.

Für die in den Figuren 2 bis 5 gezeigten Fahrrad-Baugruppen und Fahrräder bzw. Fahrradrahmen ist die Verwendung einer Fahrrad-Baugruppe gemäß einer zweite, wie in den Figuren 1c und 1d dargestellten Ausführung möglich.

In Figur 1a ist schematisch ein Stoßdämpfer 1 gemäß einer im Stand der Technik bekannten Ausführung gezeigt. Der Stoßdämpfer 1 weist zur Befestigung des Stoßdämpfers 1 in oder an einem Fahrradrahmen entlang einer Längsachse L am ersten Ende 11 ein erstes Auge 13 mit einer Durchgangsöffnung und an dem zweiten Ende 12 ein zweites Auge 14 mit einer Durchgangsöffnung auf. Die durch die Durchgangsöffnungen der Augen 13, 14 verlaufenden Schwenkachsen A, S sind parallel zueinander verlaufend. Die Befestigung des Stoßdämpfers 1 in oder an einem Fahrradrahmen am ersten Ende 11 des Stoßdämpfers 1 weist lediglich einen rotatorischen Freiheitsgrad auf.

In Figur 1b ist schematisch eine erste Ausführung einer Fahrrad-Baugruppe mit einem Stoßdämpfer 1 und einem Anlenkbügel 2 gezeigt. Eine analoge Ansicht einer Schnittdarstellung durch eine Fahrrad-Baugruppe ist in Figur 3a gezeigt. Der Stoßdämpfer 1 weist entlang einer Längsachse L am ersten Ende 11 ein erstes Auge 13 mit einer Durchgangsöffnung und an dem zweiten Ende 12 ein zweites Auge 14 mit einer Durchgangsöffnung auf. Der Stoßdämpfer 1 ist mit dem ersten Ende 11 mit zumindest einer ersten Gelenkverbindung 3 schwenkbar mit dem Anlenkbügel 2 verbunden. Durch die zumindest eine erste Gelenkverbindung 3 verläuft eine erste Schwenkachse A, welche in Figur 1b in Draufsicht dargestellt ist. Für eine schwenkbare Verbindung mit einem Fahrradrahmen 6 eines Fahrrads 9 (siehe etwa Figur 4b) weist der Anlenkbügel 2 in der dargestellten Ausführung eine zweite Gelenkverbindung 4 und eine dieser gegenüber angeordnete dritte Gelenkverbindung 5 auf. Durch die zweite Gelenkverbindung 4 und die dritte Gelenkverbindung 5 verläuft eine zweite Schwenkachse B.

In der dargestellten Montagelage des Anlenkbügels 2 am Stoßdämpfer 1 (siehe dazu auch Figur en 2, 3a und 3b) sind die zumindest eine zweite Gelenkverbindung 3 und die dritte Gelenkverbindung 4, und damit die zweite Schwenkachse B, in Bezug auf die Längsachse L des Stoßdämpfers 1 zwischen dem ersten 11 und dem zweiten 12 Ende des Stoßdämpfers 1 angeordnet. Zusätzlich sind die erste Schwenkachse A und die zweite Schwenkachse B mit einem positiven Normalabstand a voneinander beabstandet und verlaufen quer zueinander, wobei die erste Schwenkachse A und die zweite Schwenkachse B in Projektion auf die Längserstreckung L gesehen senkrecht zueinander verlaufen.

Die Befestigung des Stoßdämpfers 1 am ersten Ende 11 in oder an einem Fahrradrahmen 6 weist somit zwei rotatorische Freiheitsgrade in Form der ersten Schwenkachse A und der zweiten Schwenkachse B auf.

In den Figuren 1c und 1d sind schematisch eine Draufsicht entlang einer Längserstreckung L und eine Seitenansicht einer Fahrrad-Baugruppe gemäß einer zweiten Ausführung der Erfindung mit einem Stoßdämpfer 1 und einem Anlenkbügel 2 gezeigt. Im Unterschied zu der in Figur 1b gezeigten Ausführung weist der Anlenkbügel 2 in der Ausführung der Figuren 1c und 1d eine erste Schwenkachse A und eine zweite Schwenkachse B auf, welche mit einem positiven Normalabstand a voneinander beabstandet sind und schief zueinander verlaufen, wobei die erste Schwenkachse A und die zweite Schwenkachse B in Projektion auf die Längserstreckung L gesehen einen Winkel einschließen, der kleiner als 90 Grad ist. In der dargestellt Ausführung schließen die erste Schwenkachse A und die zweite Schwenkachse B in Projektion auf die Längserstreckung L gesehen einen Winkel von etwa 45 Grad ein. Allgemein ist ein davon abweichender Winkel in einem Bereich von 30 Grad bis 90 Grad denkbar.

Figur 2 zeigt eine perspektivische Ansicht einer Ausführung einer Fahrrad-Baugruppe mit einem Stoßdämpfer 1 und einem Anlenkbügel 2, welcher mit einer Strebe in Form einer Wippe 83 eines hier nicht näher dargestellten Hinterbaus 8 eines Fahrradrahmens 6 verbunden ist. In den Figuren 3a und 3b sind Schnittdarstellungen der in Figur 2 gezeigten Ausführung einer Fahrrad-Baugruppe mit einem Stoßdämpfer 1 und einem Anlenkbügel 2 gezeigt.

Wie den Darstellungen der Figuren 2, 3a und 3b zu entnehmen ist, weist der Anlenkbügel 2 einen Mittelteil 20 und zwei Arme 21, 22 auf, wobei die zwei Arme 21, 22 von dem Mittelteil 20 des Anlenkbügels 2 abstehend ausgebildet sind. Am Mittelteil 20 ist die zumindest eine erste Gelenkverbindung 3 ausgebildet. Am ersten Arm 21 ist die zweite Gelenkverbindung 4 und am zweiten Arm 22 die dritte Gelenkverbindung 5 für jeweils eine schwenkbare Verbindung mit einem Fahrradrahmen 6 eines Fahrrads 9 ausgebildet ist, wobei durch die zweite Gelenkverbindung 4 und die dritte Gelenkverbindung 5 die zweite Schwenkachse B verläuft.

Die erste Gelenkverbindung 3 kann wie in Figur 3b dargestellt einen im Anlenkbügel 2 gelagerten Lagerbolzen 16, welcher in Lagerbuchsen 16 im in der Durchgangsöffnung des Auges 13 am ersten Ende 11 des Stoßdämpfers 1 gelagert ist, umfassen. Analoge Ausbildungen der zweiten und dritten Gelenkverbindung 4, 5 sowie der schwenkbaren Lagerung des Stoßdämpfers 1 am zweiten Ende 12 sind ebenso denkbar.

Die zwei Arme 21, 22 sind wie in den Figuren 2, 3a und 3b erkennbar feststehend am Mittelteil 20 angeordnet, wobei der Anlenkbügel 2 vorteilhaft einstückig gefertigt sein kann. Speziell in den Figuren 2 und 3a ist erkennbar, dass die zwei Arme 21, 22 in einer vorteilhaften Ausführung zumindest abschnittsweise einen im Wesentlichen T-förmigen Querschnitt und der Mittelteil 20 zumindest abschnittsweise einen im Wesentlichen U-förmigen aufweisen können.

Eine dem Stoßdämpfer 1 zugewandte Seite des Anlenkbügels 2 kann eine konkave Krümmung aufweisen und so im Wesentlichen einer Kontur des ersten Endes 11 des Stoßdämpfers 1 folgen.

In der dargestellten Montagelage des Anlenkbügels 2 am Stoßdämpfer 1 ist der Stoßdämpfer 1 zumindest teilweise zwischen der zumindest einen ersten Gelenkverbindung 3 und der zumindest einen zweiten Gelenkverbindung 4 angeordnet. Speziell ist in Montagelage des Anlenkbügels 2 am Stoßdämpfer 1 der Stoßdämpfer 1 zumindest teilweise zwischen den zwei Armen 21, 22 angeordnet.

Zur Lage der Schwenkachsen ist insbesondere den Figuren 2, 4b und 5 zu entnehmen, dass die durch die zumindest eine zweite Gelenkverbindung 4 verlaufende zweite Schwenkachse B parallel zu der Schwenkachse H der zumindest einen schwenkbaren Strebe in Form der Wippe 83 des Hinterbaus 8 verläuft. Weiter ist den Figuren zu entnehmen, dass der Stoßdämpfer 1 mit dem zweiten Ende 12 um eine Schwenkachse S schwenkbar mit dem Hauptrahmen 7 (Figur 4b) oder dem Hinterbau 8 (Figur 6) verbunden ist, wobei die Schwenkachse S parallel zu der Schwenkachse H der zumindest einen schwenkbaren Strebe in Form der Wippe 83 des Hinterbaus 8 verläuft.

Den Figuren 2, 4b und 5 ist weiter zu entnehmen, dass in Montagelage des Anlenkbügels 2 am Stoßdämpfer 1 und des Stoßdämpfers an dem Fahrradrahmen 6 eines Fahrrads 9 die Durchgangsöffnungen der Augen 13, 14 (vgl. Figur 1b) senkrecht zueinander verlaufen.

### Bezugszeichenliste

- 1: Stoßdämpfer
- 11: erstes Ende
- 12: zweites Ende
- 13: Auge
- 14: Auge
- 15: Lagerbolzen
- 16: Lagerbuchse

- 2: Anlenkbügel
- 20: Mittelteil
- 21: Arm
- 22: Arm

- 3: erste Gelenkverbindung
- 4: zweite Gelenkverbindung
- 5: dritte Gelenkverbindung

- 6: Fahrradrahmen
- 7: Hauptrahmen
- 8: Hinterbau
- 81: Kettenstrebe
- 82: Sitzstrebe
- 83: Wippe

- 9: Fahrrad

- a: Normalabstand
- L: Längsachse Stoßdämpfer
- A: erste Schwenkachse
- B: zweite Schwenkachse
- H: Schenkachse
- S: Schwenkachse

## Patentansprüche

1. Fahrrad-Baugruppe (1, 2) umfassend
einen Stoßdämpfer (1) mit einer Längsachse (L) und einem ersten Ende (11) und einem zweiten Ende (12),
einen Anlenkbügel (2) mit zumindest einer ersten Gelenkverbindung (3) für eine schwenkbare Verbindung mit dem ersten Ende (11) des Stoßdämpfers (1) und zumindest einer zweiten Gelenkverbindung (4) für eine schwenkbare Verbindung mit einem Fahrradrahmen eines Fahrrads, wobei durch die zumindest eine erste Gelenkverbindung (3) eine erste Schwenkachse (A) verläuft und durch die zumindest eine zweite Gelenkverbindung (4) eine zweite Schwenkachse (B) verläuft,
**dadurch gekennzeichnet, dass** in Montagelage des Anlenkbügels (2) am Stoßdämpfer (1) die zumindest eine zweite Gelenkverbindung (4) und die zweite Schwenkachse (B) in Bezug auf die Längsachse (L) des Stoßdämpfers (1) zwischen dem ersten (11) und dem zweiten (12) Ende des Stoßdämpfers (1) angeordnet sind, wobei die erste Schwenkachse (A) und die zweite Schwenkachse (B) mit einem positiven Normalabstand (a) voneinander beabstandet sind und quer zueinander verlaufen.

2. Fahrrad-Baugruppe nach dem vorangehenden Anspruch, wobei der Anlenkbügel (2) einen Mittelteil (20) und zwei Arme (21, 22) aufweist, wobei die zwei Arme (21, 22) von dem Mittelteil (20) des Anlenkbügels (2) abstehend ausgebildet sind.

3. Fahrrad-Baugruppe nach dem vorangehenden Anspruch, wobei am Mittelteil (20) die zumindest eine erste Gelenkverbindung (3) ausgebildet ist und am ersten Arm (21) die zweite Gelenkverbindung (4) und am zweiten Arm (22) die dritte Gelenkverbindung (5) für jeweils eine schwenkbare Verbindung mit einem Fahrradrahmen (6) eines Fahrrads (9) ausgebildet ist, wobei durch die zweite Gelenkverbindung (4) und die dritte Gelenkverbindung (5) die zweite Schwenkachse (B) verläuft.

4. Fahrrad-Baugruppe nach einem der zwei vorangehenden Ansprüche, wobei die zwei Arme (21, 22) feststehend am Mittelteil (20) angeordnet sind, wobei vorzugsweise der Anlenkbügel (2) einstückig gefertigt ist.

5. Fahrrad-Baugruppe nach einem der vorangehenden Ansprüche, wobei der Anlenkbügel (2) zumindest abschnittsweise einen im Wesentlichen T-förmigen und/oder U-förmigen Querschnitt aufweist.

6. Fahrrad-Baugruppe nach einem der vorangehenden Ansprüche, wobei der Anlenkbügel (2) zwei von einem Mittelteil (20) des Anlenkbügels (2) abstehende Arme (21, 22) aufweist, wobei die zwei Arme (21, 22) und/oder der Mittelteil (20) zumindest abschnittsweise einen im Wesentlichen T-förmigen und/oder U-förmigen Querschnitt aufweisen.

7. Fahrrad-Baugruppe nach einem der vorangehenden Ansprüche, wobei Normalabstand (a) der ersten Schwenkachse (A) und der zweiten Schwenkachse (B) in einem Bereich von 10 Millimetern bis 75 Millimetern liegt.

8. Fahrrad-Baugruppe nach einem der vorangehenden Ansprüche, wobei eine dem Stoßdämpfer (1) zugewandte Seite des Anlenkbügels (2) eine konkave Krümmung aufweist.

9. Fahrrad-Baugruppe nach einem der vorangehenden Ansprüche, wobei in Montagelage des Anlenkbügels (2) am Stoßdämpfer (1) der Stoßdämpfer (1) zumindest teilweise zwischen der zumindest einen ersten Gelenkverbindung (3) und der zumindest einen zweiten Gelenkverbindung (4) anordenbar ist.

10. Fahrrad-Baugruppe nach einem der vorangehenden Ansprüche, wobei der Anlenkbügel (2) zumindest im Bereich der zweiten Gelenkverbindung (4) einen rohrförmigen Querschnitt aufweist und in Montagelage des Anlenkbügels (2) am Stoßdämpfer (1) der Stoßdämpfer (1) zumindest teilweise vom Anlenkbügel (2) umschlossen ist.

11. Fahrrad-Baugruppe nach einem der vorangehenden Ansprüche, wobei der Anlenkbügel (2) einen Mittelteil (20) und zwei Arme (21, 22) aufweist, wobei die zwei Arme (21, 22) von dem Mittelteil (20) des Anlenkbügels (2) abstehend ausgebildet sind, wobei in Montagelage des Anlenkbügels (2) am Stoßdämpfer (1) der Stoßdämpfer (1) zumindest teilweise zwischen den zwei Armen (21, 22) anordenbar ist.

12. Fahrradrahmen (6) mit einer Fahrrad-Baugruppe (1, 2) nach einem der vorangehenden Ansprüche, umfassend einen Hauptrahmen (7)
einen Hinterbau (8) mit zumindest einer relativ zum Hauptrahmen (7) um eine Schwenkachse (H) schwenkbaren Strebe (81, 82, 83)
wobei der Anlenkbügel (2) mit der zumindest einen ersten Gelenkverbindung (3) schwenkbar mit dem ersten Ende (11) des Stoßdämpfers (1) verbunden ist und mit der zumindest einen zweiten Gelenkverbindung (4) schwenkbar mit dem Hauptrahmen (7) oder dem Hinterbau (8) verbunden ist.

13. Fahrradrahmen nach dem vorangehenden Anspruch, wobei die durch die zumindest eine zweite Gelenkverbindung (4) verlaufende zweite Schwenkachse (B) parallel zu der Schwenkachse (H) der zumindest einen schwenkbaren Strebe (81, 82, 83) des Hinterbaus (8) verläuft.

14. Fahrradrahmen nach einem der Ansprüche 12 oder 13, wobei der Stoßdämpfer (1) mit dem ersten Ende (11) um die erste Schwenkachse (A) schwenkbar mit der zumindest einen ersten Gelenkverbindung (3) des Anlenkbügels (2) verbunden ist und mit dem zweiten Ende (12) um eine Schwenkachse (S) schwenkbar mit dem Hauptrahmen (7) oder dem Hinterbau (8) verbunden ist, wobei die Schwenkachse (S) parallel zu der Schwenkachse (H) der zumindest einen schwenkbaren Strebe (81, 82, 83) des Hinterbaus (8) verläuft.

15. Fahrradrahmen nach einem der Ansprüche 12 bis 14, wobei der Stoßdämpfer (1) an dem ersten Ende (11) ein erstes Auge (13) mit einer Durchgangsöffnung aufweist und an dem zweiten Ende (12) ein zweites Auge (14) mit einer Durchgangsöffnung aufweist, wobei in Montagelage des Anlenkbügels (2) am Stoßdämpfer (1) und des Stoßdämpfers an dem Fahrradrahmen (6) eines Fahrrads (9) die Durchgangsöffnungen der Augen (13, 14) quer zueinander verlaufen.

## Claims

1. Bicycle assembly (1, 2) comprising
a shock absorber (1) with a longitudinal axis (L) and a first end (11) and a second end (12),
a link bracket (2) with at least one first hinge connection (3) for a pivotable connection to the first end (11) of the shock absorber (1) and at least one second hinge connection (4) for a pivotable connection to a bicycle frame of a bicycle, wherein a first pivot axis (A) runs through the at least one first hinge connection (3) and a second pivot axis (B) runs through the at least one second hinge connection (4),
**characterized in that**, in the installed state of the link bracket (2) on the shock absorber (1), the at least one second hinge connection (4) and the second pivot axis (B) are arranged between the first end (11) and the second end (12) of the shock absorber (1) relative to the longitudinal axis (L) of the shock absorber (1), wherein the first pivot axis (A) and the second pivot axis (B) are spaced apart from each other by a positive normal distance (a) and run transversely to each other.

2. Bicycle assembly according to the preceding claim, wherein the link bracket (2) has a middle section (20) and two arms (21, 22), wherein the two arms (21, 22) are formed protruding from the middle section (20) of the link bracket (2).

3. Bicycle assembly according to the preceding claim, wherein the at least one first hinge connection (3) is formed on the middle section (20) and the second hinge connection (4) is formed on the first arm (21) and the third hinge connection (5) is formed on the second arm (22), for in each case a pivotable connection to a bicycle frame (6) of a bicycle (9), wherein the second pivot axis (B) runs through the second hinge connection (4) and the third hinge connection (5).

4. Bicycle assembly according to one of the two preceding claims, wherein the two arms (21, 22) are arranged stationary on the middle section (20), wherein the link bracket (2) is preferably manufactured in one piece.

5. Bicycle assembly according to one of the preceding claims, wherein the link bracket (2) has a substantially T-shaped and/or U-shaped cross section at least in sections.

6. Bicycle assembly according to one of the preceding claims, wherein the link bracket (2) has two arms (21, 22) protruding from a middle section (20) of the link bracket (2), wherein the two arms (21, 22) and/or the middle section (20) have a substantially T-shaped and/or U-shaped cross section at least in sections.

7. Bicycle assembly according to one of the preceding claims, wherein normal distance (a) between the first pivot axis (A) and the second pivot axis (B) lies in a range of from 10 millimeters to 75 millimeters.

8. Bicycle assembly according to one of the preceding claims, wherein a side of the link bracket (2) facing the shock absorber (1) has a concave curvature.

9. Bicycle assembly according to one of the preceding claims, wherein, in the installed state of the link bracket (2) on the shock absorber (1), the shock absorber (1) can be arranged at least partly between the at least one first hinge connection (3) and the at least one second hinge connection (4).

10. Bicycle assembly according to one of the preceding claims, wherein the link bracket (2) has a tubular cross section at least in the area of the second hinge connection (4) and, in the installed state of the link bracket (2) on the shock absorber (1), the shock absorber (1) is at least partly surrounded by the link bracket (2).

11. Bicycle assembly according to one of the preceding claims, wherein the link bracket (2) has a middle section (20) and two arms (21, 22), wherein the two arms (21, 22) are formed protruding from the middle section (20) of the link bracket (2), wherein, in the installed state of the link bracket (2) on the shock absorber (1), the shock absorber (1) can be arranged at least partly between the two arms (21, 22).

12. Bicycle frame (6) with a bicycle assembly (1, 2) according to one of the preceding claims, comprising a main frame (7)
a rear triangle (8) with at least one stay (81, 82, 83) pivotable about a pivot axis (H) relative to the main frame (7)
wherein the link bracket (2) is pivotably connected with the at least one first hinge connection (3) to the first end (11) of the shock absorber (1) and is pivotably connected with the at least one second hinge connection (4) to the main frame (7) or the rear triangle (8).

13. Bicycle frame according to the preceding claim, wherein the second pivot axis (B) running through the at least one second hinge connection (4) runs parallel to the pivot axis (H) of the at least one pivotable stay (81, 82, 83) of the rear triangle (8).

14. Bicycle frame according to one of claims 12 or 13, wherein, with the first end (11), the shock absorber (1) is connected to the at least one first hinge connection (3) of the link bracket (2) pivotable about the first pivot axis (A) and, with the second end (12), is connected to the main frame (7) or the rear triangle (8) pivotable about a pivot axis (S), wherein the pivot axis (S) runs parallel to the pivot axis (H) of the at least one pivotable stay (81, 82, 83) of the rear triangle (8).

15. Bicycle frame according to one of claims 12 to 14, wherein the shock absorber (1) has a first lug (13) with a through-hole at the first end (11) and has a second lug (14) with a through-hole at the second end (12), wherein, in the installed state of the link bracket (2) on the shock absorber (1) and of the shock absorber on the bicycle frame (6) of a bicycle (9), the through-holes of the lugs (13, 14) run transversely to each other.

## Revendications

1. Ensemble bicyclette (1, 2) comprenant
un amortisseur (1) avec un axe longitudinal (L) et une première extrémité (11) et une seconde extrémité (12), un étrier articulé (2) avec au moins une première liaison articulée (3) pour une liaison pivotante avec la première extrémité (11) de l'amortisseur (1) et au moins une deuxième liaison articulée (4) pour une liaison pivotante avec un cadre de bicyclette d'une bicyclette, dans lequel un premier axe de pivotement (A) passe à travers l'au moins une première liaison articulée (3) et un deuxième axe de pivotement (B) passe à travers l'au moins une deuxième liaison articulée (4),
**caractérisé en ce qu'**en position de montage de l'étrier d'articulation (2) sur l'amortisseur (1), l'au moins une deuxième liaison articulée (4) et le deuxième axe de pivotement (B) sont disposés par rapport à l'axe longitudinal (L) de l'amortisseur (1) entre la première (11) et la seconde (12) extrémité de l'amortisseur (1), dans lequel le premier axe de pivotement (A) et le deuxième axe de pivotement (B) sont espacés l'un de l'autre d'une distance normale positive (a) et s'étendent transversalement l'un par rapport à l'autre.

2. Ensemble bicyclette selon la revendication précédente, dans lequel l'étrier articulé (2) présente une partie centrale (20) et deux bras (21, 22), dans lequel les deux bras (21, 22) sont réalisés de manière à dépasser de la partie centrale (20) de l'étrier articulé (2).

3. Ensemble bicyclette selon la revendication précédente, dans lequel au moins une première liaison articulée (3) est réalisée sur la partie centrale (20) et la deuxième liaison articulée (4) est réalisée sur le premier bras (21) et la troisième liaison articulée (5) est réalisée sur le deuxième bras (22) pour respectivement une liaison pivotante avec un cadre de bicyclette (6) d'une bicyclette (9), dans lequel le deuxième axe de pivotement (B) passe à travers la deuxième liaison articulée (4) et la troisième liaison articulée (5).

4. Ensemble bicyclette selon l'une quelconque des deux revendications précédentes, dans lequel les deux bras (21, 22) sont disposés de manière fixe sur la partie centrale (20), dans lequel l'étrier articulé (2) est de préférence fabriqué en une seule pièce.

5. Ensemble bicyclette selon l'une quelconque des revendications précédentes, dans lequel l'étrier articulé (2) présente au moins par endroits une section transversale sensiblement en forme de T et/ou en forme de U.

6. Ensemble bicyclette selon l'une quelconque des revendications précédentes, dans lequel l'étrier articulé (2) présente deux bras (21, 22) dépassant d'une partie centrale (20) de l'étrier articulé (2), dans lequel les deux bras (21, 22) et/ou la partie centrale (20) présentent au moins par endroits une section transversale sensiblement en forme de T et/ou en forme de U.

7. Ensemble bicyclette selon l'une quelconque des revendications précédentes, dans lequel la distance normale (a) du premier axe de pivotement (A) et du deuxième axe de pivotement (B) se situe dans une plage de 10 millimètres à 75 millimètres.

8. Ensemble bicyclette selon l'une quelconque des revendications précédentes, dans lequel un côté de l'étrier articulé (2) tourné vers l'amortisseur (1) présente une incurvation concave.

9. Ensemble bicyclette selon l'une quelconque des revendications précédentes, dans lequel en position de montage de l'étrier articulé (2) sur l'amortisseur (1), l'amortisseur (1) peut être disposé au moins en partie entre l'au moins une première liaison articulée (3) et l'au moins une deuxième liaison articulée (4).

10. Ensemble bicyclette selon l'une quelconque des revendications précédentes, dans lequel l'étrier articulé (2) présente une section transversale tubulaire au moins dans la zone de la deuxième liaison articulée (4) et l'amortisseur (1) est entouré au moins en partie par l'étrier articulé (2) en position de montage de l'étrier articulé (2) sur l'amortisseur (1).

11. Ensemble bicyclette selon l'une quelconque des revendications précédentes, dans lequel l'étrier articulé (2) présente une partie centrale (20) et deux bras (21, 22), dans lequel les deux bras (21, 22) sont réalisés de manière à dépasser de la partie centrale (20) de l'étrier articulé (2), dans lequel en position de montage de l'étrier articulé (2) sur l'amortisseur (1), l'amortisseur (1) peut être disposé au moins en partie entre les deux bras (21, 22).

12. Cadre de bicyclette (6) avec un ensemble bicyclette (1, 2) selon l'une quelconque des revendications précédentes, comprenant un cadre principal (7)
une structure arrière (8) avec au moins une entretoise (81, 82, 83) pouvant pivoter autour d'un axe de pivotement (H) par rapport au cadre principal (7)
dans lequel l'étrier articulé (2) est relié de manière pivotante à la première extrémité (11) de l'amortisseur (1) par l'au moins une première liaison articulée (3) et est relié de manière pivotante au cadre principal (7) ou à la structure arrière (8) par l'au moins une deuxième liaison articulée (4).

13. Cadre de bicyclette selon la revendication précédente, dans lequel le deuxième axe de pivotement (B) passant par l'au moins une deuxième liaison articulée (4) est parallèle à l'axe de pivotement (H) de l'au moins une entretoise pivotante (81, 82, 83) de la structure arrière (8).

14. Cadre de bicyclette selon l'une quelconque des revendications 12 ou 13, dans lequel l'amortisseur (1) est relié à l'au moins une première liaison articulée (3) de l'étrier articulé (2) de manière pivotante autour du premier axe de pivotement (A) par la première extrémité (11) et est relié au cadre principal (7) ou à la structure arrière (8) de manière pivotante autour d'un axe de pivotement (S) par la seconde extrémité (12), dans lequel l'axe de pivotement (S) s'étend parallèlement à l'axe de pivotement (H) de l'au moins une entretoise pivotante (81, 82, 83) de la structure arrière (8).

15. Cadre de bicyclette selon l'une quelconque des revendications 12 à 14, dans lequel l'amortisseur (1) présente sur la première extrémité (11) un premier œillet (13) avec un orifice de passage et présente sur la seconde extrémité (12) un second œillet (14) avec un orifice de passage, dans lequel en position de montage de l'étrier articulé (2) sur l'amortisseur (1) et de l'amortisseur sur le cadre de bicyclette (6) d'une bicyclette (9), les orifices de passage des œillets (13, 14) s'étendent transversalement l'un à l'autre.
